# EUROPEAN PATENT APPLICATION

(11) **EP 0 857 616 A1**
(43) Date of publication of application: **12.08.1998**
(21) Application number: 98101272.7
(22) Date of filing: 26.01.1998
(51) Int. Cl.: B60R 16/02

(54) **A device to allow sharing of a communication line**

(30) Priority: 05.02.1997 IT TO970088
(71) Applicant: MAGNETI MARELLI S.p.A., 20145 Milano (IT)
(72) Inventor: Nazha, Hassan, 27028 S. Martino Siccomario (Pavia) (IT)
(74) Representative: Quinterno, Giuseppe

(57) **Abstract**

A device operable to allow sharing of a serial line (TX1-A, RX1-A) of a microcontroller (A) of a panel (QB) of a vehicle between a normal serial line (3), utilised during operation of the vehicle, and a diagnosis serial line (FLT). This device includes a multiplexer (7) operable to switch the input of the serial line (TX1-A, RX1-A) of the microcontroller (A) between the normal serial line (3) and the diagnosis serial line and to connect the normal serial line to two input/output terminals (IN, OUT) of the microcontroller (A) when the terminals (TX1-A, RX1-A) of the serial line of the microcontroller (A) are connected to the diagnosis serial line (FLT).

## Description

The present invention relates in general to a device operable to allow sharing of a serial line of a microcontroller or a microprocessor. More specifically the present invention relates to a device operable to allow sharing of a serial line of a microcontroller between a serial diagnosis line and a serial line of other type.

The channels of communication of a microcontroller, such as for example serial lines (SCI, SPI) are normally limited in number for reasons of cost. There is a technical disadvantage when all the serial lines of a microprocessor are fully engaged, which makes it necessary to use another serial line for diagnosis.

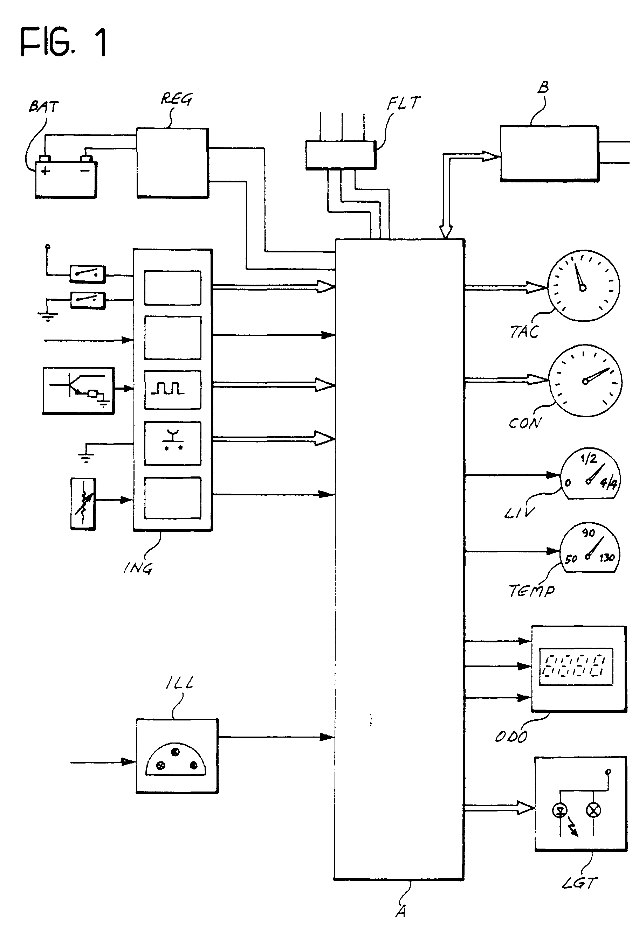

By way of example there is shown in Figure 1 a block schematic representation of a computerised instrument panel which includes a first microcontroller A dedicated to the management of all the functions required of a computerised instrument panel of a motor vehicle such as, for example: displaying the vehicle speed, engine speed, water temperature, fuel level, LCD (liquid crystal display) management, and a second microcontroller B dedicated to the management of a communication network, for example of multiplex type, which manages other input/output functions and exchanges information with the first microcontroller A through a serial line.

As can be noted, the first microcontroller A receives a series of inputs, schematically represented by the block ING, through which it receives information relating to the vehicle on which it is installed. Such inputs are, for example, connected to switches and/or push buttons of the control devices, sensors and detectors disposed at various points in the vehicle, such as for example a potentiometric fuel level sensor. In the drawing there are also indicated an input ILL indicative of the illumination of the computerised instrument panel and a power supply to the microcontroller A, which comes from an accumulator battery BAT installed on board the vehicle, via a regulator REG operable to provide the necessary voltages to the microcontroller A.

The microcontroller A also receives further information, indicative of the state of and operation of the vehicle and its devices, by means of its connection with the second microcontroller B. The microcontroller A therefore provides for the management of all the indicator instruments of the computerised instrument panel. These instruments are for example a speed indicator TAC, a revolution counter CON, a fuel level indicator LIV, an engine coolant water temperature indicator TEMP, an odometer ODO. The microcontroller A further acts to control the state of a plurality of indicator devices such as, for example, lamps and light-emitting diodes or LEDs, and liquid crystal display devices or LCDs.

Consequently the microcontroller A has available a series of communication channels to permit the connections with the various inputs and outputs mentioned above. Typically, therefore, the microcontroller A has available a dedicated serial communication line for connection with the second microcontroller B, a dedicated serial line for control of the liquid crystal display devices and, in the case of vehicles with automatic gearboxes, a dedicated serial line, in this case functioning only for reception, for communications with a central control unit for controlling the automatic gearbox.

There is moreover the necessity, typically, of having available a serial line, indicated FLT, for effecting diagnosis of the microcontroller A and of the instrument panel. The need for this further serial line however presents technical problems in that the communication resources of the microcontroller A are typically already fully utilised.

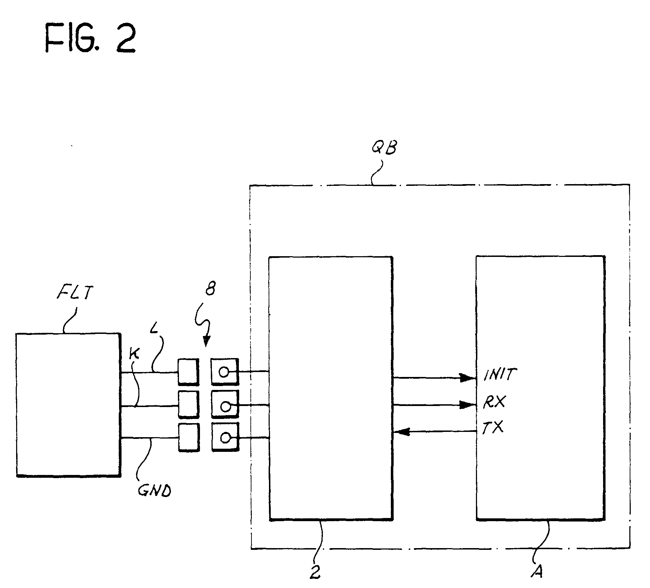

In Figure 2 there is shown a block schematic diagram relating to a computerised instrument panel QB provided with a diagnosis interface 2. This diagnosis interface 2 serves to allow connection between the microcontroller A and the serial diagnosis line FLT represented in the drawing as a module outside the computerised instrument panel QB. It can be noted that the module FLT is connected to the computerised instrument panel QB through a dedicated three-way connector 8, the three ways being indicated as:
- line L
- line K
- ground GND.

The line L is unidirectional and sends to the computerised instrument panel QB a signal, indicated INIT, to initiate communication. The line K is bi-directional. The ground line GND is provided by the computerised instrument panel QB for the serial diagnosis line FLT.

Three signals are exchanged between the microcontroller A and the diagnosis interface 2: signal INIT already mentioned, received on line L, and signals TX, RX which serve for the communication from the microcontroller A to the module FLT or from the module FLT to the microcontroller A, through the line K.

In a general case, as is indicated above, the disadvantage arises that a serial line FLT for diagnosis is necessary, which is not available in that, typically, all the serial lines of the microcontroller A are already used.

The object of the present invention is that of providing a device able to allow sharing of a serial line which permits all the problems indicated above to be resolved in a satisfactory manner.

According to the present invention this object is achieved by a device able to allow sharing of a serial line, having the characteristics indicated in the claims which follow the present description.

Further advantages and characteristics of the present invention will become evident from the following detailed description, given with the aid of the attached drawings, provided purely by way of non-limitative example, in which:
- Figures 1 and 2 are schematic block diagrams of computerised instrument panels according to the prior art and have been already described;
- Figure 3 is a block schematic diagram of a computerised instrument panel formed as an embodiment of the device according to the invention; and
- Figures 4 to 6 are block schematic diagrams of computerised instrument panels formed as alternative embodiments of the device according to the invention.

The invention essentially consists in connecting the serial line of the microcontroller, by means of a particular multiplexer circuit, selectively either with a serial line normally utilised in the computerised instrument panel or with a serial line utilised for diagnosis.

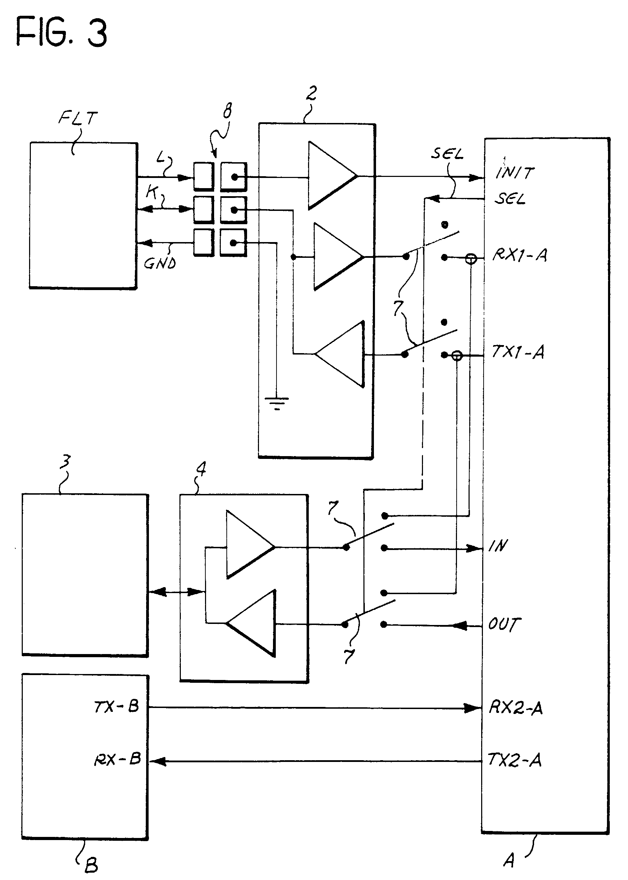

In Figure 3 there is shown a computerised instrument panel comprising a possible embodiment of the device according to the invention. In Figure 3 and the following figures the parts and elements already described with reference to the preceding figures have been again allocated the same alphanumeric references.

As can be noted in Figure 3 the two microcontrollers A and B are shown connected together by a dedicated serial line. This serial line connects two terminals, a transmission terminal TX-B and a reception terminal RX-B of the microcontroller B with two terminals, a reception terminal RX2-A and a transmission terminal TX2-A respectively of the microcontroller A. The microcontroller B communicates with the microcontroller A in a continuous manner both in the case of diagnosis and in the normal case, with the vehicle in motion.

There can also be seen a serial line 3 of conventional type, normally utilised in association with an interface circuit 4, and a serial line FLT utilised for diagnosis.

The normal serial line 3 is connected via the interface 4 to two terminals, a transmission terminal TX1-A and a reception terminal RX1-A of the microcontroller A. The serial diagnosis line FLT is connected to an interface 2 of the computerised instrument panel by means of a three-terminal connector 8. These three terminals serve for the lines L, K and GND. The diagnosis interface 2 receives the line L at its input, exchanges data through the line K, provides the signal INIT to the microcontroller A and provides ground GND to the serial diagnosis line FLT and exchanges data with the microcontroller A through the terminals TX1-A and RX1-A.

If it is desired to effect diagnosis of the microcontroller A (with the vehicle not moving) the normal serial line 3 is connected to two input/output terminals of the microcontroller A, indicated IN and OUT respectively. In practice these conditions occur when the microcontroller A receives a sequence of data through the input INIT which indicates a request for diagnosis. Following this request the microcontroller A modifies the state of an output control signal SEL in such a way that the connection of the serial diagnosis line FLT is transferred on to the terminals TX1-A and RX1-A of the microcontroller A, usually utilised for the normal serial line 3.

To effect this operation the multiplexer circuit commutes from one position to the other in dependence on the signal SEL. In a first case this signal SEL, generated by the microcontroller A, is for example "high" (5V) and permits connection between the normal serial line 3 and the microcontroller A through the terminals TX1-A and RX1-A, whereas in a second case this signal SEL is for example "low" (0V) and permits connection between the serial diagnosis line FLT and the microcontroller A through the terminals TX1-A and RX1-A, and, temporarily between the normal serial line 3 and the microcontroller A via the terminals IN and OUT.

This two-way multiplexer, controlled by the signal SEL, comprises four switches, generally indicated 7, and more specifically two switches 7 connected to the interface 2 of the diagnosis line FLT, and two switches 7 connected to the interface 4 associated with the normal serial line 3.

In Figure 3 there has been shown a normal serial line 3 of bidirectional type, however the invention is also applicable in the case of a unidirectional serial line, both towards the microcontroller A, using only the terminal RX1-A, and from the microcontroller A towards the outside using only the terminal TX1-A.

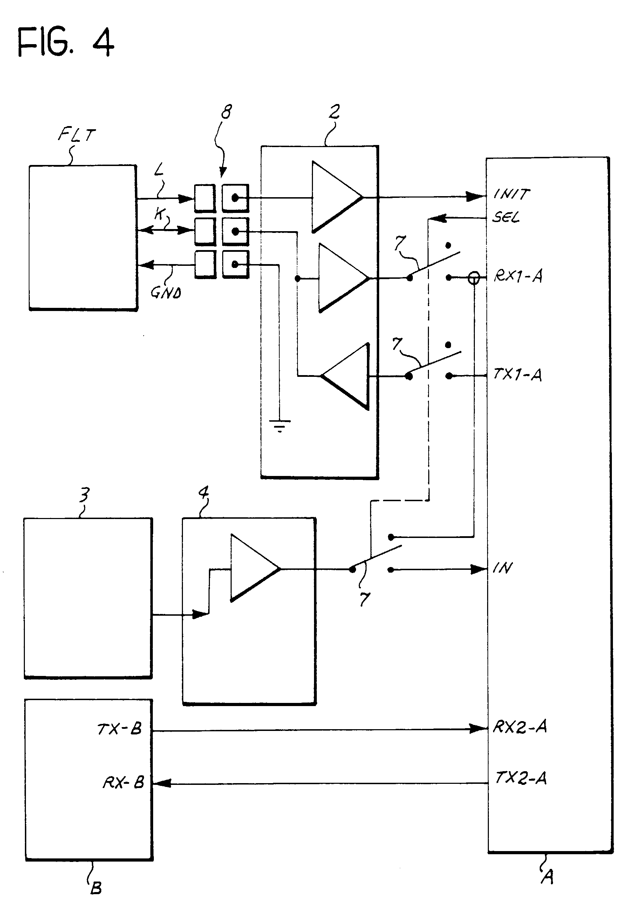

In Figure 4 there is shown an alternative embodiment in which the normal serial line 3 is a serial line of unidirectional type operable to allow communication only towards the microcontroller A. In this case only the input terminal IN of the microcontroller A is used and a single switch 7 connected to the interface 4 of the normal serial line 3.

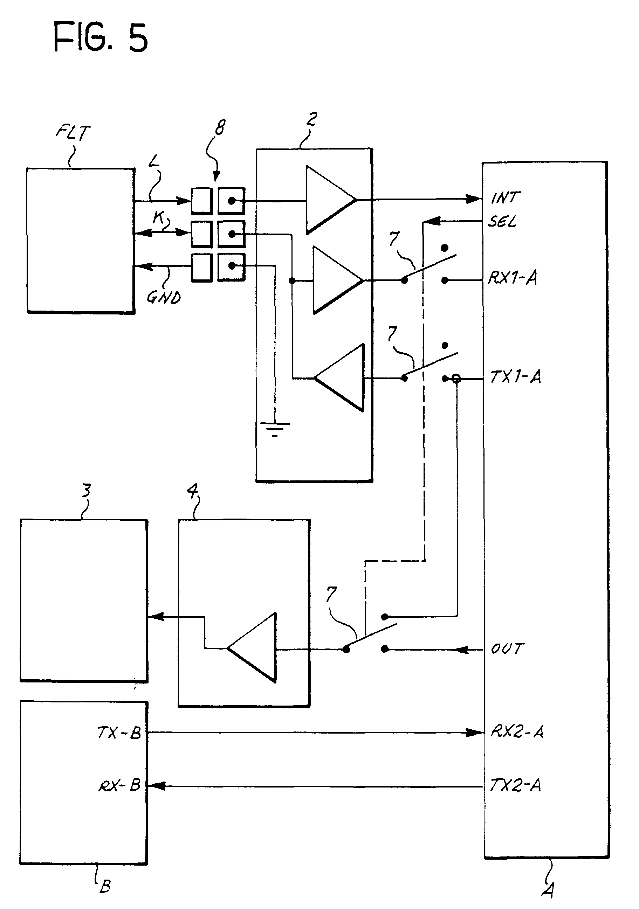

In Figure 5 there is shown an alternative embodiment, like the preceding one, in which the normal serial line 3 is of the unidirectional type with the single difference that it allows communication from the microcontroller A towards the outside. In this case the OUT terminal of the microcontroller A is naturally utilised.

Naturally, the principle of the invention remaining the same, the details of construction and the embodiments can be widely varied with respect to what has been described and illustrated, without by this departing from the ambit of the present invention as defined in the annexed claims.

## Claims

1. A device operable to allow a serial communication channel (TX1-A, RX1-A) of a microcontroller (A) to be shared,
characterised in that it comprises a multiplexer circuit (7) so configured that:
- in a first operative condition it connects a first serial line (FLT) to two communication terminals (TX1-A, RX1-A) of the said serial communication channel of the said microcontroller (A), and a second serial line (3) to two input/output terminals (IN, OUT) of the said microcontroller (A), and
- in a second operative condition it disconnects the said first serial line (FLT) from the said two communication terminals (TX1-A, RX1-A) of the said serial communication channel of the said microcontroller (A), and connects the said second serial line (3) to the said two communication terminals (TX1-A, RX1-A) of the said serial communication channel of the said microcontroller (A).

2. A device according to Claim 1, characterised in that the said first serial line (FLT) is a serial diagnosis line operable to allow connection of the said microcontroller (A) with a diagnosis device.

3. A device according to Claim 2, in which the said microcontroller (A) is intended for management of a computerised instrument panel (QB) of a vehicle, characterised in that the said first operative condition is a condition in which a diagnosis of the said microcontroller (A) with the vehicle stationary is effected, and the said second operative condition is a condition of normal use of the said vehicle.

4. A device according to any of Claims from 1 to 3, characterised in that the said multiplexer circuit (7) is a two-way multiplexer circuit (7) controlled by the said microcontroller (A) via a relation signal (SEL).

5. A device according to Claim 4, characterised in that the said multiplexer circuit includes at least one switch (7) operable selectively to connect the said two terminals (TX1-A, RX1-A) of the said communication channel to the said second serial line (3) in the said second operative condition.

6. A device according to Claim 5, characterised in that the said multiplexer circuit further includes two switches (7) operable selectively to connect the said two terminals (TX1-A, RX1-A) of the said communication channel to the said first serial line (FLT) in the said first operative condition.

7. A device according to Claim 5 or Claim 6, characterised in that the said at least one switch (7) is operable selectively to connect the said second serial line (3) and at least one input/output terminal (IN, OUT) of the said microcontroller (A) in the said first operative condition.

8. A device according to any of Claims from 5 to 7, characterised in that the said multiplexer circuit includes two switches (7).
